# EUROPÄISCHE PATENTSCHRIFT

(11) **EP 0 391 948 B1**
(45) Veröffentlichungstag und Bekanntmachung des Hinweises auf die Patenterteilung: **16.03.1994**
(21) Anmeldenummer: 89900236.4
(22) Anmeldetag: 12.12.1988
(51) Int. Cl.: G02B 6/44

(54) **KABEL**
CABLE
CABLE

(30) Priorität: 24.12.1987 DE 3744125
(43) Veröffentlichungstag der Anmeldung: 17.10.1990
(73) Patentinhaber: Deutsche Thomson-Brandt GmbH, 78003 Villingen-Schwenningen (DE)
(72) Erfinder: GLEIM, Günter, D-7730 Villingen-Schwenningen (DE); QUANDT, Siegfried, D-7730 Villingen-Schwenningen (DE)
(86) Internationale Anmeldenummer: EP8801143
(87) Internationale Veröffentlichungsnummer: WO8905988

(56) Entgegenhaltungen:
- US-A- 4 095 101
- US-A- 4 436 368
- US-A- 4 660 928

## Beschreibung

Die Erfindung betrifft ein Kabel mit mindestens einer elektrisch leitenden Ader zur elektrischen Übertragung von Energie oder von einer ersten Art von Nachrichten und mindestens einer die Ader umgebenden Schicht, deren Material elektrisch isolierend und zur optischen Übertragung von einer zweiten Art von Nachrichten optisch leitend gewählt ist.

Elektrische Kabel werden in nahezu allen Bereichen der Technik eingesetzt. So werden z.B. Antennensignale über Koaxialkabel zum Empfänger, z.B. einem Fernseh- oder Rundfunkgerät, geleitet. In der Fernsprechtechnik sind Koaxialkabel nicht mehr wegzudenken. Jedoch werden gerade in diesem Bereich der Technik immer mehr Koaxialkabel durch Lichtleiterkabel ersetzt, weil sie gegenüber Koaxialkabeln eine wesentlich größere Bandbreite sowie eine geringere Dämpfung aufweisen und weil keinerlei Abschirmprobleme aufgrund der Verwendung von Licht als Energieträger zu lösen sind. Das bei Koaxialkabeln nur sehr schwer zu unterdrückende Nebensprechen tritt bei der optischen Nachrichtenübertragung überhaupt nicht auf.

Viele Geräte, wie z.B. Fernsehgeräte und Videorecorder sind aber für Koaxialkabel ausgerüstet. So werden die Videosignale vom Videorecorder über ein Koaxialkabel zum Fernsehgerät übertragen. Zum Betrieb einer Kombination aus Videorecorder und Fernsehgerät ist es aber vorteilhaft, zwischen den bei den Einheiten zusätzlich zu den Bild- und Tonsignalen Steuersignale zu übertragen. Wegen der geringen Bandbreite, besonders jedoch wegen der durch die Steuersignale verursachten Störungen des Videosignals und der nur aufwendig in den Geräten durchführbaren Trennung von Video- und Steuersignalen ist es nicht ratsam, die Steuersignale zusammen mit den Videosignalen über das Koaxialkabel zu übertragen. Der Fachmann ist daher gezwungen, für die Übertragung der Steuersignale eine gesonderte Leitung vorzusehen, was jedoch zu einem unerwünschten Aufwand führt.

Bei anderen Geräten der Unterhaltungselektronik, z.B. HiFi-Anlagen mit Plattenspieler, CD-Spieler, Rundfunkempfänger, Cassettenrecorder und Verstärker sind die einzelnen Einheiten durch einfache Kabel miteinander verbunden. Sofern neben Musik und Sprache auch Steuersignale zu übertragen sind, ist für die Steuersignale aus denselben Gründen ebenfalls eine gesonderte Leitung erforderlich.

Aus der US-PS 4 660 928 ist ein Kabel hoher Zugfestigkeit bekannt, bei dem ein elektrischer Leiter von einem Mantel aus einer oder mehreren Glasfasern umgeben ist. Dieses Kabel ist dafür geeignet, schwere geologische Meßgeräte in Bohrungen oder Schächte abzusenken, die Meßgeräte mittels des elektrischen Leiters mit Strom zu versorgen und Meßdaten über die Glasfaser zu einer auf der Erdoberfläche stehenden Empfangsstation zu übertragen. Ein Nachteil dieses Kabels ist die relativ teure Glasfaser.

Es ist daher Aufgabe der Erfindung, einen Weg zu zeigen, wie zwischen zwei Geraten, die durch ein Kabel zur elektrischen Nachrichten- oder Energieübertragung miteinander verbunden sind, andere Nachrichten auch übertragbar sind, ohne daß hierzu eine zusätzliche Leitung erforderlich ist, ohne daß eine Glasfaser vorzusehen ist und ohne daß die elektrische Nachrichten- oder Energieübertragung auf dem Kabel gestört wird.

Die Erfindung löst diese Aufgabe dadurch, daß die mindestens eine Ader von nur einer einzigen optisch leitenden Isolationsschicht umgeben ist und daß mindestens ein Ende des Kabels in einem Verbindungsstück gefaßt ist, das an der Stelle, wo die optisch leitende Isolationsschicht des Kabels anliegt, zur optischen Kopplung lichtdurchlässig gestaltet ist.

Es zeigen
- Figur 1: einen Querschnitt durch ein erfindungsgemäßes einadriges Kabel
- Figur 2: einen Längsschnitt durch ein erfindungsgemäßes Kabel mit einem Verbindungsstück an einem Ende
- Figur 3: einen Längsschnitt durch ein erfindungsgemäßes Kabel mit einem Verbindungsstück an einem Ende
- Figur 4: ein Nachrichtenübertragungssystem aus einem Videorecorder, einem Fernsehgerät und dem erfindungsgemäßen Kabel.

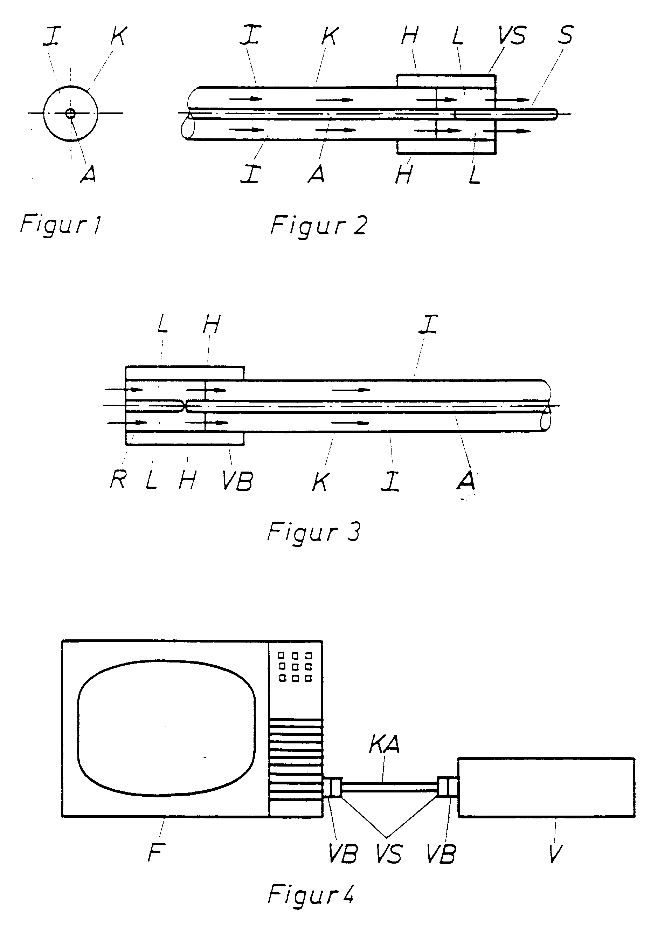

In der Figur 1 ist der Querschnitt eines erfindungsgemäßen einadrigen Kabels K gezeigt, dessen elektrische Ader A aus Draht im Innern einer röhrenförmigen optisch leitenden Isolationsschicht I verläuft.

In der Figur 2 ist ein Längsschnitt des in Figur 1 im Querschnitt gezeigten Kabels K dargestellt, dessen eines Ende in einem als Stecker ausgeführten Verbindungsstück VS gefaßt ist. Der Stecker VS ist nach außen von einer röhrenförmigen Hülse H abgeschlossen, die teilweise über das Kabel K gesteckt wird. Im Innern der Hülse H ist zentral ein Stift S angeordnet, der mit der Ader A des Kabels K elektrisch leitend verbunden ist. Zwischen dem Stift S und der röhrenförmigen Hülse H ist eine röhrenförmige optische Kupplung L eingebettet, für die vorzugsweise der gleiche Querschnitt wie für die Isolationsschicht I des Kabels K gewählt ist. Die Isolationsschicht I des Kabels K kann an der optischen Kupplung L anliegen, muß es jedoch nicht, weil durch einen leeren Raum zwischen der Isolationsschicht I und der optischen Kupplung L die optische Verbindung höchstens gedämpft, keineswegs aber unterbrochen wird.

Das durch Pfeile angedeutete Licht strahlt von der Isolationsschicht I in die optische Kupplung L, an deren Stirnseite es austritt und z.B. in die optische Kupplung einer zum Stecker VS passenden Buchse VB strahlt, die beispielsweise im Gehäuse eines Gerätes angebracht sein kann.

Die Buchse VB in Figur 3 ist nach außen von einer Hülse H abgeschlossen, die teilweise über das Kabel K gesteckt wird. Im Innern der Hülse H ist zentral eine röhrenförmige Öffnung R zur Aufnahme des Stiftes S des Steckers VS angeordnet, die mit der Ader A des Kabels K leitend verbunden ist. Zwischen der röhrenförmigen Öffnung R zur Aufnahme des Stiftes S des Steckers VS ist eine ebenfalls röhrenförmige optische Kupplung L eingebettet, für die vorzugsweise der gleiche Querschnitt wie für die Isolationsschicht I des Kabels K gewählt ist. Wie beim Stecker VS aus Figur 2 kann die Isolationsschicht I des Kabels K an der optischen Kupplung L anliegen, muß es aber nicht, weil durch einen leeren Raum zwischen der Isolationsschicht I und der optischen Kupplung L die optische Verbindung nicht unterbrochen wird. Das durch Pfeile angedeutete Licht tritt von der optischen Kupplung L des in Figur 2 gezeigten Steckers VS kommend in die optische Kupplung L der Buchse VB ein, an deren Ende es in die Isolationsschicht I des Kabels K strahlt.

Das Kabel K kann z.B. mittels bekannter Schraub-, Quetsch- oder Lötverbindungen in dem Stecker VS oder der Buchse VB befestigt sein. Mittels eines Feder- oder Schleifkontaktes wird der Stift S des Steckers VS in der röhrenförmigen Öffnung R der Buchse VB gehalten und die elektrische Verbindung zwischen dem Stift S und der röhrenförmigen Öffnung R hergestellt.

Wenn z.B. wie in Figur 2 das Licht von der lichtdurchlässigen Isolationsschicht I des Kabels K in die optische Kupplung L strahlt, ist es vorteilhaft, den Querschnitt der optischen Kupplung L größer als den Querschnitt der Isolationsschicht I zu wählen, damit alles aus der Isolationsschicht I strahlende Licht von der optischen Kupplung L gesammelt wird.

Strahlt dagegen wie in Figur 3 das Licht von der optischen Kupplung L in die optisch leitende Isolationsschicht I des Kabels K, ist es vorteilhaft, den Querschnitt der optischen Kupplung L kleiner als den Querschnitt der Isolationsschicht I zu wählen, damit alles aus der optischen Kupplung L strahlende Licht von der Isolationsschicht I des Kabels K eingefangen wird.

Soll Licht abwechslungsweise in beide Richtungen übertragen werden, so ist es jedoch günstiger, für die optische Kupplung L und die Isolationsschicht I denselben Querschnitt zu wählen.

Anhand des in Figur 4 abgebildeten Nachrichtenübertragungssystems wird eine Möglichkeit erläutert, das erfindungsgemäße Kabel einzusetzen.

Ein Videorecorder V ist über ein Koaxialkabel KA, dessen als Dielektrikum wirkende Isolationsschicht erfindungsgemäß aus optisch gut leitendem Material hergestellt ist, mit einem Fernsehgerät F verbunden. Die Enden des Koaxialkabels KA sind z.B. in Steckern VS gefaßt, wie sie in Figur 2 gezeigt sind. An den Geräten, d.h. dem Videorecorder V und dem Fernsehgerät F sind zu den Steckern VS passende Buchsen VB angebracht, die an der Stelle, wo die optische Kupplung L des Steckers VS anliegt, ebenfalls mit einer optischen Kupplung ausgestattet sind, an deren dem Stecker VS abgewandten Seite ein optischer Sender und/oder Empfänger angeschlossen ist. Beim jeweils sendenden Gerät strahlt das Licht vom optischen Sender durch die optische Kupplung der Buchse zur optischen Kupplung des Steckers , von dort durch das Koaxialkabel KA über die optische Kupplung des Steckers und der Buchse zum optischen Empfänger des jeweils empfangenden Gerätes. Sowohl der Videorecorder V als auch das Fernsehgerät F können mit einem optischen Sender, z.B. einer Infrarotleuchtdiode, und einem optischen Empfänger ausgestattet sein, um die optische Nachrichtenübertragung in beide Übertragungsrichtungen zu ermöglichen.

Weil die Videosignale auf elektrischem Weg, die Steuersignale dagegen auf optischem Weg übertragen werden, beeinflussen sie sich gegenseitig nicht und müssen außerdem im Videorecorder V und im Fernsehgerät F nicht voneinander getrennt werden. Schließlich sind für die Nachrichtenübertragung nicht zwei verschiedene Kabel und je zwei Anschlußbuchsen am Videorecorder V und am Fernsehgerät F für die beiden Kabel vorzusehen. Ein einziges Kabel genügt.

Ein weiterer Vorteil ist darin zu sehen, daß die optische Nachrichtenübertragung auf dem Koaxialkabel nicht durch Infrarotfernbedienungsgeräte gestört werden kann.

Das erfindungsgemäße Kabel, eine Kombination aus elektrischem Kabel und Lichtleiterkabel, ist jedoch nicht auf den beschriebenen Anwendungsfall beschränkt. Mittels des erfindungsgemäßen Kabels können zwischen zwei Geräten, z.B. Zwischenverstärker, Endgeräte, Datenstationen usw., beliebig Nachrichten jeder Art gleichzeitig sowohl auf elektrischem als auch auf optischem Weg übertragen werden.

Bei einem Flachbandkabel können z.B. die Isolierungen der einzelnen Drähte aus optisch leitendem Material gefertigt sein, so daß so viele optische Übertragungskanäle gewonnen werden, wie Drähte vorhanden sind. Ein erfindungsgemäßes Netzkabel oder Energiekabel überträgt nicht nur elektrische Energie, sondern auch optische Nachrichten beliebiger Art, ohne daß sich die Nachrichten- und die Energieübertragung gegenseitig stören.

Vergleicht man ein herkömmliches Kabel mit einem erfindungsgemäßen Kabel gleichen Typs und gleichen Querschnitts, so übertrifft die Übertragungskapazität des erfindungsgemäßen Kabels die des bekannten um ein Vielfaches.

## Patentansprüche

1. Kabel (K) mit mindestens einer elektrisch leitenden Ader (A) zur elektrischen Übertragung von Energie oder von einer ersten Art von Nachrichten und mindestens einer die Ader umgebenden Schicht (I), deren Material elektrisch isolierend und zur optischen Übertragung von einer zweiten Art von Nachrichten optisch leitend gewählt ist, **dadurch gekennzeichnet**, daß die mindestens eine Ader (A) von nur einer einzigen optisch leitenden Isolationsschicht (I) umgeben ist und daß mindestens ein Ende des Kabels (K) in einem Verbindungsstück (VS, VB) gefaßt ist, das an der Stelle, wo die optisch leitende Isolationsschicht (I) des Kabels (K) anliegt, zur optischen Kopplung lichtdurchlässig gestaltet ist.

2. Kabel nach Anspruch 1, **dadurch gekennzeichnet**, daß derjenige Teil des Verbindungsstücks (VS,VB), der den optischen Übertragungskanal bildet, aus optisch leitendem Material (L) gefertigt ist.

3. Kabel nach Anspruch 1 oder 2, **dadurch gekennzeichnet**, daß es sich um ein Koaxialkabel (KA) handelt, dessen zwischen dem elektrisch-leitenden Innen- und dem Außenleiter als Dielektrikum wirkende Isolationsschicht (I) optisch leitend ist.

4. Kabel nach Anspruch 1 oder 2, **dadurch gekennzeichnet**, daß es sich um ein Flachbandkabel handelt, und daß die Isolationsschichten der einzelnen Adern in Längsrichtung optisch leitend aber gegeneinander optisch isoliert sind.

## Claims

1. Cable (K) having at least one electrically conductive core (A) for the electrical transmission of energy or of a first type of information and at least one layer (I) surrounding the core whose material is selected to be electrically insulating and optically transmissive for the optical transmission of a second type of information, characterised in that, the at least one core (A) is surrounded by only a single, optically transmissive, insulating layer (I) and in that at least one end of the cable (K) is held in a connecting element (VS, VB) which is made transparent for the optical coupling at the point where the optically transmissive insulating layer (I) of the cable (K) abuts.

2. Cable in accordance with Claim 1, characterised in that, that part of the connecting element (VS or VB) that constitutes the optical transmission channel is made of an optically transmissive material (L).

3. Cable in accordance with Claim 1 or 2, characterised in that, it is in the form of a coaxial cable (KA) whose insulating layer (I) between the electrically conductive inner and outer conductors is effective as a dielectric and is optically transmissive.

4. Cable in accordance with Claim 1 or 2, characterised in that, it is in the form of a ribbon cable and in that the insulating layers of the individual wires are optically transmissive in the longitudinal direction but are mutually optically isolated.

## Revendications

1. Câble (K) avec au moins un brin électroconducteur (A) pour la transmission électrique de l'énergie ou d'un premier type d'informations et avec au moins une couche (I) entourant le brin, couche dont le matériau est choisi isolant électriquement et conducteur optiquement pour la transmission optique d'un second type d'informations, **caractérisé en ce** que le brin (A) qui existe au moins est entouré par une seule couche isolante (I) conductrice optiquement et qu'au moins une extrémité du câble (K) est contenue dans une pièce de connexion (VS, VB) qui est configurée en étant perméable à la lumière pour le couplage optique à l'endroit où adhère la couche isolante conductrice optiquement (I) du câble (K).

2. Câble selon la revendication 1, **caractérisé en ce** que la partie de la pièce de connexion (VS, VB) qui forme le canal de transmission otpique est fabriquée en matériau conducteur optiquement (L).

3. Câble selon la revendication 1 ou 2, **caractérisé en ce** qu'il s'agit d'un câble coaxial (KA) dont la couche isolante (I) qui agit comme diélectrique entre le conducteur intérieur électroconducteur et le conducteur extérieur est conductrice optiquement.

4. Câble selon la revendication 1 ou 2, **caractérisé en ce** qu'il s'agit d'un câble plat et que les couches isolantes des différents brins sont conductrices optiquement dans le sens longitudinal tout en étant cependant isolées optiquement les uns des autres.
